(19) Europäisches Patentamt / European Patent Office / Office européen des brevets

(11) **EP 4 501 108 A1**

(12) **DEMANDE DE BREVET EUROPEEN**

(43) Date de publication:
**05.02.2025 Bulletin 2025/06**

(21) Numéro de dépôt: **23189063.3**

(22) Date de dépôt: **01.08.2023**

(51) Classification Internationale des Brevets (IPC):
**A01M 1/02** (2006.01)     **A01M 1/24** (2006.01)
**G06Q 50/02** (2024.01)

(52) Classification Coopérative des Brevets (CPC):
**A01M 1/026; A01M 1/24;** G06Q 50/02; G06Q 50/08

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **Berkem Developpement**
**33290 Blanquefort (FR)**

(72) Inventeurs:
• **FAHY, Olivier**
  **33000 BORDEAUX (FR)**
• **MESSAOUDI, Daouia**
  **69800 SAINT-PRIESST (FR)**
• **BOUTIN, Mathias**
  **33290 BLANQUEFORT (FR)**
• **MOUSSU, Eric**
  **33290 BLANQUEFORT (FR)**

(74) Mandataire: **Plasseraud IP**
**104 Rue de Richelieu**
**CS92104**
**75080 Paris Cedex 02 (FR)**

(54) **SYSTEME DE DETECTION D'INSECTES NUISIBLES ET PROCEDE ASSOCIE**

(57) Système de détection d'insectes nuisibles comportant un groupe de boîtiers appât/piège enterrés de type boîtier tubulaire muni d'un logement (11) pour au moins une masse (40) de matériau comestible pour lesdits insectes et muni d'un dispositif de détection de consommation de ladite masse comestible par lesdits insectes pourvu d'une électronique de mesure (20) comportant un dispositif de mesure d'une première fréquence (f1) au niveau d'un premier oscillateur à relaxation (21) comprenant un premier condensateur de mesure réalisé par deux premières plaques (22, 23) situées de part et d'autre de ladite masse comestible (40), ladite masse comestible formant un matériau diélectrique entre lesdites plaques (22, 23), un processeur (25) configuré pour procéder à des premières mesures de la première fréquence, au moins un module concentrateur, les boîtiers dudit groupe de boîtiers et ledit module concentrateur comportant chacun des premiers moyens de communication radio (C) configurés pour transmettre lesdites premières mesures depuis lesdits boîtiers audit concentrateur, au moins un serveur distant (9), ledit module concentrateur (8) et ledit serveur (9) comportant chacun des seconds moyens de communication (83, 84) configurés pour transmettre lesdites premières mesures depuis le boîtier concentrateur vers le serveur distant, ledit serveur distant étant muni d'un programme de surveillance comportant des moyens de calcul configurés pour mesurer une variation de fréquence caractéristique de la variation de densité de la masse comestible d'au moins un boîtier du groupe de boîtiers au moins à partir d'une pluralité desdites premières mesures.

FIG. 1

EP 4 501 108 A1

## Description

### Domaine technique

L'invention relève du domaine de la protection des bâtiments et constructions contre l'attaque d'insectes nuisibles et concerne plus particulièrement les dispositif pièges avec appâts adaptés pour des insectes nuisibles souterrains et notamment les termites.

### Technique antérieure

De nombreuses réalisations de pièges pour des insectes nuisibles souterrains comme les termites existent et par exemple les documents EP2015159A1, EP3648594A1, US2010/043276A1 traitent de dispositifs s'enfonçant dans le sol et pouvant être garnis soit de matériau appétent pour les termites pour permettre une détection de leur présence lorsqu'ils mangent ce matériau soit de matériau appétent et comportant un insecticide destiné à éradiquer lesdits termites.
Le document US2007/120690A1 décrit pour sa part un système de détection comportant des boîtiers pièges/appâts avec circuit électronique de détection se répartissant sur une surface de terrain autour d'une construction à protéger et un dispositif d'interrogation desdits boîtiers.

### Problème technique

Un besoin d'améliorer la détection de l'activité des insectes nuisibles au moyen de pièges/appâts, de simplifier la gestion de ces pièges/appâts et de simplifier les procédures d'éradication de ces insectes existe et la présente divulgation propose un système de détection permettant une surveillance à distance et une planification d'interventions sur site lors de la détection de la présence des insectes nuisibles.

### Exposé de l'invention

Au vu de cette situation la présente divulgation propose plus précisément un système de détection d'insectes nuisibles comportant :

a. un groupe de boîtiers appât/piège enterrés de type boîtier tubulaire muni d'un logement pourvu d'une première partie en partie basse du boîtier, pour au moins une masse comestible comportant un matériau comestible pour lesdits insectes et muni d'un dispositif de détection de consommation de ladite masse comestible par lesdits insectes pourvu d'une électronique de mesure comportant :

b. un dispositif de mesure d'une première fréquence au niveau d'un premier oscillateur à relaxation comprenant un premier condensateur de mesure réalisé par deux premières plaques situées de part et d'autre de ladite masse comestible, ladite masse comestible formant un matériau diélectrique entre lesdites plaques,

c. un processeur configuré pour procéder à des premières mesures de la première fréquence selon une première périodicité ;

d. au moins un module concentrateur, les boîtiers dudit groupe de boîtiers et ledit module concentrateur comportant chacun des premiers moyens de communication radio configurés pour transmettre lesdites premières mesures depuis lesdits boîtiers audit concentrateur selon une deuxième périodicité ;

e. au moins un serveur distant,

ledit module concentrateur et ledit serveur comportant chacun des seconds moyens de communication configurés pour transmettre lesdites premières mesures depuis le boîtier concentrateur vers le serveur distant selon une troisième périodicité , ledit serveur distant étant muni d'un programme de surveillance comportant des moyens de calcul configurés pour mesurer des variations de fréquence caractéristiques d'une variation de densité de la masse comestible d'au moins un boîtier du groupe de boîtiers au moins à partir d'une pluralité desdites premières mesures cette variation de densité permettant de détecter une consommation de la masse comestible par les insectes.
Les mesures réalisées de manière périodique permettent une surveillance en continu des boîtiers reliés au concentrateur, permettent de déterminer notamment quels boîtiers sont infectés les premiers et permettent de déterminer quels boîtiers doivent être rechargés éventuellement par une masse comestible comprenant une composition insecticide.
Selon des modes de réalisation pouvant être combinés ou indépendants :
Au moins certains des boîtiers dudit groupe de boîtiers peuvent être munis d'un circuit de compensation comportant au moins un deuxième oscillateur à relaxation comprenant un deuxième condensateur de mesure réalisé par des deuxièmes plaques disposées au-dessus des premières plaques, ladite électronique de mesure et ledit processeur étant configurés pour réaliser des deuxièmes mesures de la deuxième fréquence selon une quatrième périodicité et transmettre lesdites deuxièmes mesures audit concentrateur selon une cinquième périodicité
Ladite quatrième périodicité peut être égale à la première périodicité et/ou la cinquième périodicité peut être égale à la deuxième périodicité.
Lesdits boîtiers étant chacun pourvu d'un dispositif de gestion de phases de sommeil et de phases de réveil périodiques de leur processeur, ledit processeur est avantageusement configuré pour, lors de ses phases de réveil, réaliser les mesures de fréquence, au moyen du dispositif de mesure desdites fréquences et pour gérer l'établissement et la poursuite d'une communication avec le module concentrateur et transmettre lesdites mesures audit module concentrateur.

Ledit module concentrateur peut pour sa part être configuré pour communiquer avec lesdits boîtiers pour recevoir périodiquement lesdites premières mesures de chaque boîtier, compiler lesdites mesures de l'ensemble des boîtiers du groupe de boîtiers et transmettre lesdites mesures compilées vers ledit serveur distant muni dudit programme de surveillance et des moyens de calcul, lesdits moyens de calcul pouvant être configurés pour calculer pour chaque boîtier une ou plusieurs variations de la fréquence du premier oscillateur en fonction du temps en sorte de détecter une variation caractéristique de densité d'au moins une desdites masses comestibles à partir desdites variations.

La présente divulgation concerne en outre un procédé de protection d'une surface de terrain, notamment une surface de terrain entourant un ou plusieurs bâtiments, au moyen d'un système de détection tel que décrit ci-dessus, le procédé comportant :

a. une installation d'un module concentrateur,

b. l'implantation d'un groupe de boîtiers appâts/pièges renfermant chacun une masse comestible de matériau comestible pour lesdits insectes dans ladite surface,

c. un appariement desdits un ou plusieurs desdits boîtiers avec ledit concentrateur lors d'une étape d'appariement réalisée pour chacun desdits boîtier,

d. un appariement dudit concentrateur au serveur lors d'une étape d'appariement réalisée pour ledit concentrateur,

e. une mise du concentrateur en écoute desdits boîtiers configurés et une transmission de manière périodique après des périodes de sommeil des mesures de fréquences effectuées par les dispositifs de mesure desdits boîtiers audit concentrateur,

f. une transmission selon la troisième périodicité des mesures de la pluralité de boîtiers depuis le concentrateur vers ledit serveur distant,

g. un calcul par le serveur distant des variations sur les séries de données de fréquences en fonction du temps pour chaque boîtier dudit groupe et la réalisation d'une évaluation de la variation de la densité du contenu du piège au niveau d'au moins une desdites masses comestibles à partir desdites variations par détection de points d'inflexion et/ou de changements de pente sur lesdites séries de données.

Le serveur distant peut traiter les données de mesure pour détecter la présence desdits insectes dans un boitier via la détection d'oscillations de mesure s'apparentant soit à une consommation de la matrice, soit à un apport de terre, soit les deux.

Le procédé peut comporter un calcul par le serveur distant de l'évolution de ladite variation de densité et un algorithme de détermination à partir de ladite évolution si lesdits insectes sont présents dans au moins un boîtier pour déclencher une intervention afin de disposer, dans ledit au moins un boîtier, un appât comprenant une composition létale pour lesdits insectes nuisibles ou déterminer à partir de ladite variation de densité le moment à partir duquel une dite intervention est à prévoir.

Selon un mode de réalisation avantageux, ledit serveur distant peut traiter les données de mesure pour déterminer pour chaque boîtier un taux de consommation des masses comestibles et générer un dit planning d'intervention pour la pluralité de boîtiers.

Les boîtiers peuvent être configurés pour transmettre périodiquement, outre les données de mesure des boîtiers, des trames de données comportant au moins une donnée parmi :

a. un identifiant unique du boîtier,

b. une température du boîtier,

c. une mesure de fréquence du premier oscillateur à relaxation,

d. une mesure de fréquence du deuxième oscillateur à relaxation,

e. une datation de la mesure.

Les boîtiers étant munis de circuits de compensation comportant au moins un deuxième oscillateur à relaxation comprenant un deuxième condensateur de mesure réalisé par des deuxièmes plaques disposées hors de la présence de ladite masse comestible, lesdites électroniques de mesure et lesdits processeurs desdits boîtiers peuvent être configurés pour réaliser des deuxièmes mesures de la deuxième fréquence selon une quatrième périodicité et transmettre lesdites deuxièmes mesures audit concentrateur selon ladite quatrième périodicité, le serveur distant est configuré pour effectuer l'évaluation de la consommation des masses comestibles par les insectes à partir de calculs comportant des calculs de fréquences différentielles entre la fréquence du premier oscillateur à relaxation et du second oscillateur à relaxation.

Les calculs de fréquences différentielles entre le premier et le second oscillateur à relaxation peuvent être du type :

$$F = (F_A - S_A) - [(F_B - S_B) \times k]$$

où :

- *F* étant la Fréquence différentielle résultante, après compensation,

- $F_A$, $F_B$ étant les fréquences mesurées sur les condensateurs A de mesure et B du circuit de compensation,

- $S_A$, $S_B$ étant des offset de compensation des condensateurs A et B,

- *k* étant une constante de compensation qui dépend de la construction du piège, du choix des matériaux, ainsi que de la taille des plaques des condensateurs, ce calcul étant effectué pour une série de mesures successives réalisées par chaque boîtier.

Les offsets correspondent avantageusement à une capacité à vide des deux condensateurs A et B et sont mesurés lors d'une étape d'initialisation du dispositif lors de l'installation d'un piège en l'absence de masse comestible de sorte que *F*A0=SA et de même *F*B0 = SB.

Le serveur distant peut être configuré pour enregistrer les mesures en provenance des boîtiers et constituer une base de données de mesure formant une base de données d'apprentissage profond pour un réseau de neurones.

De manière complémentaire ou alternative, le serveur distant peut être configuré pour estimer la consommation des masses comestibles à l'aide d'un algorithme d'intelligence artificielle basé sur ledit réseau de neurones entraîné préalablement avec ladite base de données d'apprentissage profond pour les mesures de fréquence.

Le concentrateur peut transmettre au serveur outre les données de mesure, des trames de données comportant au moins l'une des données parmi :

    a. un niveau de réception en dBm du concentrateur,

    b. une version du logiciel du module concentrateur,

    c. une version du logiciel de communication du module concentrateur vers le serveur distant,

    d. une indication que le module concentrateur est en procédure d'appairage,

    e. un tableau comportant pour chaque boîtier au moins l'un des:

    f. un identifiant unique du boîtier,

    g. un niveau de réception du signal radio entre boîtier et concentrateur,

    h. un niveau de pile du boîtier restant en %,

    i. une version du logiciel du boîtier,

    j. une ou plusieurs données indiquant si le boîtier est en mode appairage,

Le serveur distant est préférablement configuré pour effectuer à partir des données reçues un diagnostic du fonctionnement des moyens de communication du module concentrateur, un diagnostic de la pile du boîtier et du dispositif de communication du boîtier.

Le serveur comportant un dispositif collecteur configuré pour collecter les messages issus des boîtiers tels que transmis par les modules concentrateurs, le procédé peut comporter une mise en oeuvre d'un processus de traitement comportant une génération d'une carte, et/ou d'une liste et/ou d'un tableau représentant la répartition des boîtiers reliés à un module concentrateur pour lesquels une présence des insectes a été détectée et un processus service web et/ou application mobile adapté à permettre la consultation par des utilisateurs de ladite carte, de ladite liste ou dudit tableau.

Le serveur comportant une base de données d'interventions représentative des implantations de boîtiers et de modules concentrateurs sur un territoire, le procédé peut comporter une mise en oeuvre d'un processus d'organisation d'un planning d'intervention sur lesdits boîtiers sur ledit territoire par des techniciens surveillant lesdits boîtiers et modules concentrateurs en fonction de l'avancée de la consommation desdites masses comestibles.

Le procédé peut comporter une mise à jour de la base de données d'interventions par des techniciens avec les interventions effectuées.

Une fois les insectes détectés, les masses comestibles peuvent être remplacées ou complétées par des galets ou d'autres masses comestibles munis d'une composition insecticide. Les insectes concernés par la présente invention sont notamment les termites.

**Brève description des dessins**

D'autres caractéristiques, détails et avantages de l'invention apparaîtront à la lecture de la description détaillée ci-après d'exemples de réalisation non limitatifs, et à l'analyse des dessins annexés, sur lesquels :

    [Fig. 1] montre une vue en éclaté d'un boitier selon la présente divulgation;

    [Fig. 2] montre une vue schématique d'une électronique d'un boitier selon la présente divulgation;

    [Fig. 3] montre un détail de circuits générateurs de fréquence;

    [Fig. 4] montre une vue du boîtier de la figure 1 et de consommables adaptés à ce boîtier;

[Fig. 5] montre schématiquement des étapes de fonctionnement d'un boîtier;

[Fig. 6] montre un schéma simplifié 'un concentrateur ;

[Fig. 7] montre une vue schématique d'un système de détection d'insectes nuisibles ;

[Fig. 8A], [Fig. 8B], [Fig. 8C] montrent des courbes de détection d'activité d'insectes nuisibles par le système de détection d'insectes de la présente divulgation ;

[Fig. 9] montre un logigramme simplifié d'étape d'un procédé selon la présente divulgation ;

[Fig. 10A], [Fig. 10B], [Fig. 10C montrent des courbes de détection du système de détection d'insectes de la présente divulgation au niveau d'un boîtier non infesté.

**Description des modes de réalisation**

Les dessins et la description ci-après contiennent des éléments pouvant non seulement servir à mieux faire comprendre la présente invention, mais aussi contribuer à sa définition, le cas échéant.

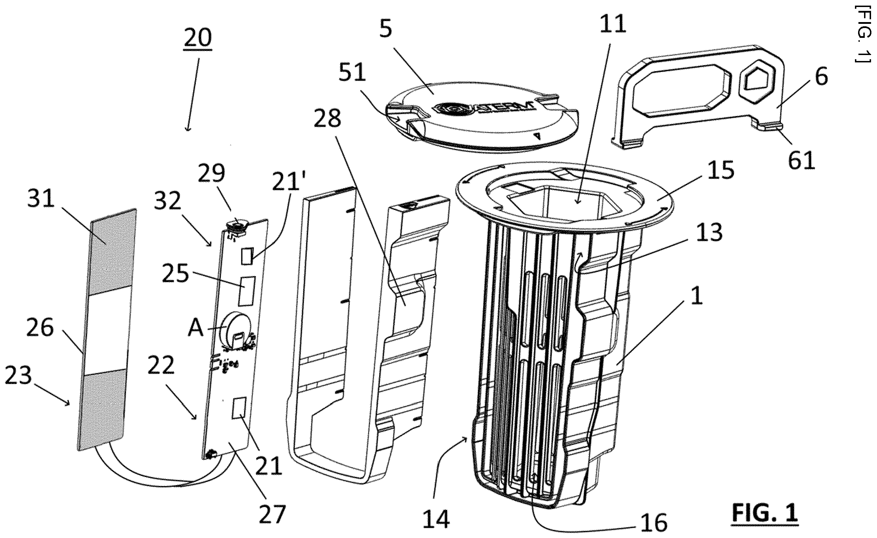

Le dispositif de détection d'insectes nuisibles représenté notamment en figure 1, comporte un boîtier tubulaire 1 ajouré implantable dans le sol.

Ce boitier est pourvu d'un axe longitudinal A qui va être un axe vertical une fois que le boîtier est implanté dans le sol, d'une collerette supérieure 15 qui va reposer sur le sol une fois que le boîtier y est enfoncé. Il comporte une enveloppe tubulaire 12 ajourée et munie pour ce faire de fentes verticales 16 qui forme un logement qui s'étend selon l'axe longitudinal A depuis un sommet ouvert du boîtier comportant ladite collerette jusqu'à un fond du boîtier, le logement étant divisé à peu près par moitié entre une partie supérieure et une partie inférieure.

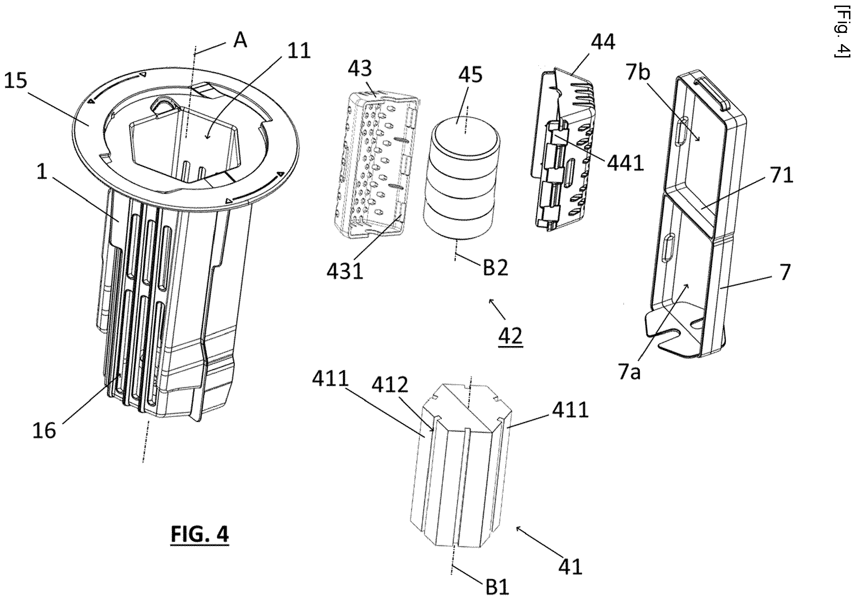

Selon un mode de réalisation, le logement est destiné à recevoir dans un premier temps une masse comestible 40 de matériau comestible par lesdits insectes tel que représentée par exemple en figure 4 sous la forme d'un bloc de bois ou de matériau à base de cellulose qui se loge dans le fond du logement.

Le logement 11 peut recevoir dans un second temps ledit bloc et une recharge 42, aussi représentée en figure 4, qui seront décrits plus bas.

La masse comestible 40 peut être un bloc 41 comme vu ci-dessus mais la masse comestible peut aussi être un empilage de galets. Le bloc de bois peut être en bois massif ou un mélange de cellulose. Le bois massif peut être par exemple du peuplier moins sensible à l'humidité que la cellulose. La masse comestible sous la forme d'un bloc peut être un cylindre de section circulaire ou hexagonale en une ou deux parties.

De retour à la figure 1, l'enveloppe tubulaire 12 comporte sur deux de ses côtés opposés des doubles parois formant des cavités latérales 13, 14 Ces cavités latérales, dont une extrémité transversale perpendiculairement à l'axe longitudinal du boîtier entre les doubles parois est ouverte tandis que l'autre extrémité transversale est fermée, vont recevoir une électronique 20 de détection d'activité desdits insectes dont un exemple de réalisation est décrit plus bas.

L'enveloppe tubulaire 12 du boîtier selon l'exemple a une section hexagonale selon un plan transversal audit axe A et lesdites doubles parois sont disposées en vis-à-vis le long de deux faces diamétralement opposées de ladite enveloppe. L'enveloppe peut aussi avoir une section de forme générale ovale avec deux faces aplaties à l'endroit où sont formées les cavités latérales 13, 14.

Toujours en référence à la figure 1, l'électronique 20 de détection d'activité desdits insectes comporte au moins deux électrodes capacitives 22, 23 de détection, ces électrodes étant disposées dans les cavités latérales 13, 14 de part et d'autre de la partie inférieure du logement tubulaire 11 recevant le bloc 41 de matériau comestible par lesdits insectes.

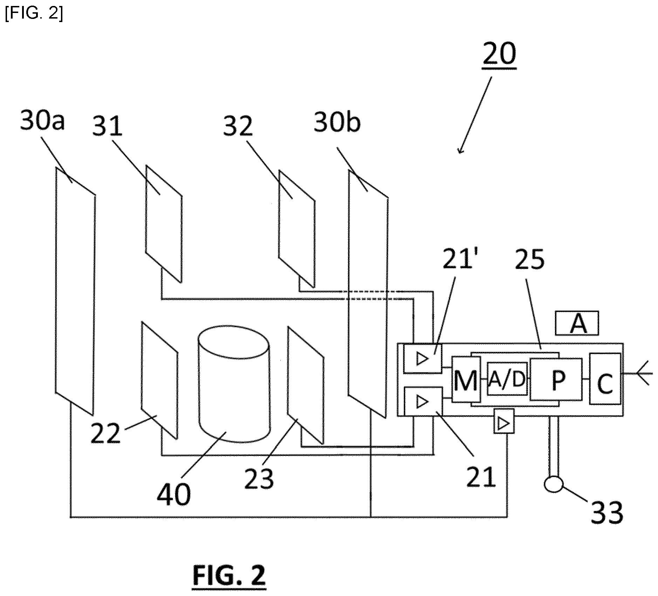

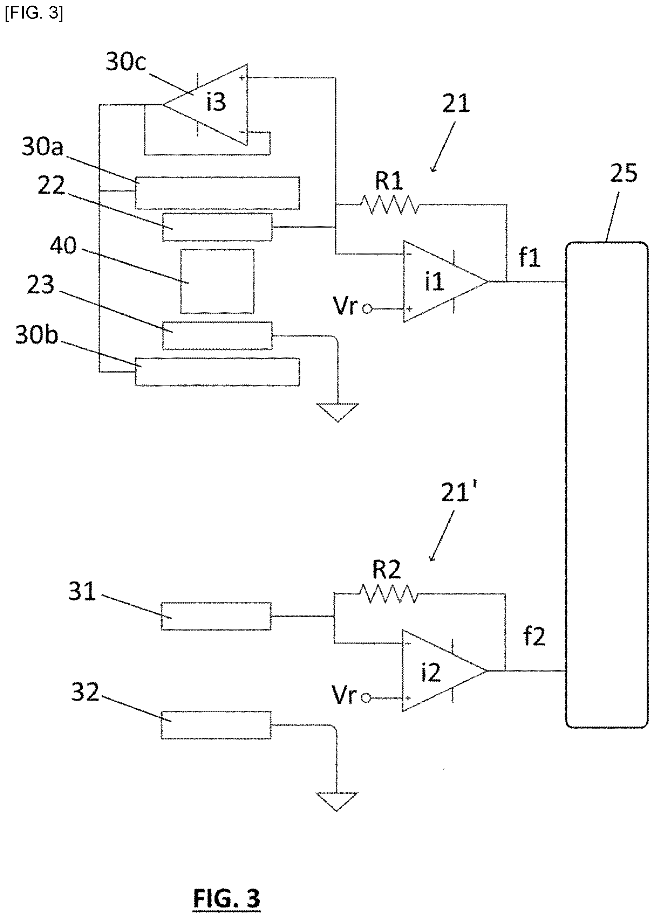

L'électronique de détection représentée schématiquement à la figure 2 comporte un premier circuit générateur de fréquence à oscillateur à relaxation 21, tel que par exemple détaillé à la figure 3, et, en tant qu'élément capacitif, lesdites électrodes capacitives 22, 23 de détection. Le premier circuit générateur de fréquence est relié à un dispositif de détection de fréquence d'oscillation 25, ledit oscillateur à relaxation 21 étant configuré pour générer une première fréquence d'oscillation f1 au moins en partie dépendante de la densité de ladite masse comestible 40 de sorte que la consommation de cette masse comestible 40 par lesdits insectes modifie la première fréquence d'oscillation f1 dudit oscillateur.

Toujours selon la figure 3, le premier générateur de fréquence comporte un amplificateur opérationnel i1 dont la sortie est reliée à l'entrée négative par une résistance R1, cette entrée négative recevant une électrode capacitive de détection 22 tandis que l'autre électrode capacitive de détection 23 est reliée à un potentiel fixe tel que la masse comestible de l'électronique de détection. La résistance R1, l'amplificateur opérationnel i1 sont choisis tels que lors d'une calibration du boîtier hors du sol et sans bloc 41 dans le logement 11 avec des plaques de détection de hauteur et de largeur de l'ordre de 30 mm à 60 mm de hauteur et 20 mm à 50 mm de largeur et préférablement de l'ordre de 50 mm $\times$ 35 mm et espacées de 50 à 70 mm et préférablement de 60 mm, le générateur génère une fréquence f1=$S_A$ fréquence initiale de l'ordre de 10 kHz à 400 kHz et préférablement de l'ordre de 100 kHz plus ou moins 20 kHz.

L'électronique comporte en outre un capteur de température 33.

Selon cet exemple, le dispositif comporte un second circuit générateur de fréquence à second oscillateur à relaxation 21' pourvu d'au moins deux électrodes capacitives de compensation 31, 32 en tant qu'élément capacitif, disposées dans le boîtier de part et d'autre d'une partie supérieure du logement tubulaire.

Toujours selon l'exemple de la figure 3, une première plaque 31 de compensation est raccordée à l'entrée négative d'un second amplificateur opérationnel i2 tandis que la seconde plaque 32 de compensation est relié à un potentiel nul de l'électronique de détection.

De même, la résistance R2 et l'amplificateur opérationnel i2 dudit second circuit sont tels que lors d'une calibration du boîtier hors du sol avec des plaques de hauteur, de largeur et d'espacement similaires aux plaques de détection, la fréquence f2=$S_B$ de compensation est du même de l'ordre de 10 kHz à 400 kHz et préférablement de l'ordre de 50 kHz plus ou moins 20 kHz.

Alors que la fréquence f1 émise par le premier circuit générateur de fréquence va évoluer en fonction de la variation de densité de la masse comestible 40 disposée entre les électrodes capacitives de détection 22, 23 lors de sa consommation par les insectes, la fréquence f2 émise par le second circuit générateur de fréquence va, en l'absence de masse consommable entre les électrodes de compensation, évoluer différemment de la fréquence générée par le premier générateur de fréquence et par exemple dépendre des conditions d'humidité et de température dans le sol au niveau des électrodes de compensation 31, 32 ou réagir à un éventuel apport de terre par les insectes ce qui permet d'affiner éventuellement les mesures comme vu plus loin.

Le processeur P peut notamment être constitué par un microcontrôleur de faible consommation associé à une mémoire vive et une mémoire non-volatile éventuellement programmable ou reprogrammable telle que par exemple une mémoire Flash, une EPROM ou une EEPROM qui contient le programme permettant de réaliser les mesures, lesdites mémoires pouvant être toutes ou en partie incluses dans ledit microcontrôleur.

Le microcontrôleur peut aussi comprendre les amplificateurs opérationnels 21, 21' reliés chacun à un circuit convertisseur analogique/digital M ou reliés à un unique convertisseur au travers d'un multiplexeur, ledit ou lesdits convertisseurs convertissant les fréquences générés par lesdits premier circuit générateur de fréquence et second circuit générateur de fréquence en données numériques de signaux de fréquence et relié à une unité de calcul configurée pour mesurer lesdites données numériques de signaux de fréquence.

Selon un mode de réalisation non décrit, les amplificateurs opérationnels i1 et i2 peuvent aussi être remplacés par un unique amplificateur opérationnel précédé d'un multiplexeur qui va alternativement raccorder les plaques 22 et 31 audit unique amplificateur opérationnel pour effectuer alternativement les mesures de fréquence en sortie dudit amplificateur opérationnel.

Le dispositif comporte en outre un blindage actif pourvu de deux plaques 30a, 30b portées au potentiel d'une électrode capacitive du premier oscillateur à relaxation 21 en sorte de rendre les mesures indépendantes d'éventuels bruits électromagnétiques ambiants. Ce blindage actif comporte un troisième amplificateur opérationnel i3 câblé en suiveur auquel sont reliées les deux plaques 30a, 30b.

Selon la figure 2, ladite électronique comporte un module de communication C qui peut être intégré ou non audit processeur et est pourvu d'un dispositif d'émission/réception radio configuré pour transmettre lesdites données numériques à un système de surveillance distant 8. L'électronique comporte en outre un dispositif d'alimentation A pourvu d'une pile et d'un dispositif mise en veille profonde et de réveil de l'électronique pour en réduire la consommation afin de viser une autonomie du dispositif d'au moins 2 à 5 ans.

De retour à la figure 1, l'électronique de détection comporte toujours selon l'exemple deux plaques 26, 27 de circuits imprimés, une première des plaques 26 comportant une première 22 desdites électrodes capacitives de détection, lesdits circuits générateurs de fréquence 21, 21' et ledit dispositif de détection de fréquence d'oscillation 25 et une seconde des plaques 27 reliée à la première par un circuit souple ou des fils de liaison comportant une deuxième 23 desdites électrodes capacitives de détection.

Dans l'exemple représenté, la première desdites plaques 26, 27 porte une première électrode capacitive de compensation et la seconde desdites plaques porte une seconde électrode capacitive de compensation.

Les plaques 30a, 30b du blindage actif peuvent être réalisées à partir de couches particulières des plaques de circuits imprimés de type multicouches à la manière de plans de masse.

Comme représenté en figure 1, l'électronique positionnée dans lesdites cavités est noyée dans un enrobage de protection 28 qui laisse dépasser un voyant lumineux 29 piloté par le processeur P pour visualiser la séquence d'appairage initiée par exemple par un appui long sur un bouton du boîtier relié au processeur pour déclencher une séquence d'appairage.

Au plan mécanique, le boîtier 1 reçoit la masse comestible 40 tel qu'un bloc 41 dans le fond du logement 11, le bloc 41 étant positionné dans un cadre tiroir 7 s'insérant de manière amovible dans le logement tubulaire. Le cadre tiroir comporte deux logements 7a et 7b séparés par une traverse 71 de sorte que le cadre tiroir puisse recevoir des recharges 42 comportant une composition insecticide dans des galets 45 comestibles par les insectes dans une partie du boîtier de réception d'une recharge 42 au-dessus de la partie de fond du boîtier recevant ledit bloc.

Le bloc 41 comestible par lesdits insectes comporte selon l'exemple un assemblage cylindrique de section hexagonale régulière perpendiculairement à un axe B1 passant par le centre de ladite section, formé de deux parties de bois massives 411 de section en prisme trapézoïdal et comporte des rainures externes 412 parallèle audit axe de révolution. La conformation en deux parties permet de simplifier la fabrication du bloc et d'en réduire le coût par l'utilisation de pièces en bois de plus faible épaisseur que pour le bloc entier.

Les rainures externes 412 créent des zones d'attaque du bloc pour les insectes.

Les recharges, aussi appelées capsules, reçues dans la partie du logement tubulaire au-dessus de la partie de fond du boîtier recevant ledit bloc, comportent un emballage ajouré 43, 44 et des galets 45 consommables par lesdits insectes.

Le cadre tiroir reçoit la recharge 42 dans son logement supérieur 7b au-dessus du bloc 41, la recharge 42 et le bloc 41 étant séparés par la traverse 71.

Le boîtier comporte à son sommet un couvercle 5 amovible pour fermer le logement tubulaire. Le couvercle se retire pour introduire le tiroir équipé d'une ou deux masses comestibles ou d'une ou deux recharges ou d'une combinaison recharge/masse comestible et le ressortir.

Selon l'exemple, le couvercle de type quart de tour avec des languettes s'insérant dans des rainures du boîtier est pourvu d'encoches 51 d'encliquetage de pieds 61 d'une poignée amovible 6.

La recharge comportant un emballage 43, 44 et des galets 45 consommables par lesdits insectes, l'emballage est un emballage ajouré qui comporte deux demi-coquilles ajourées pourvues de moyens d'encliquetage complémentaires 431, 441 ou reliées par une charnière pour que l'opérateur ne manipule pas directement les galets insecticides qui sont ici des galets cylindriques de matériau comestible empilés dans ledit emballage.

Les galets sont notamment constitués de copeaux ou granules de cellulose compressés comportant une composition insecticide ou non.

Pour se conformer au logement du boîtier, l'emballage 43, 44 est de section hexagonale perpendiculairement à un axe longitudinal central B2 de ladite recharge.

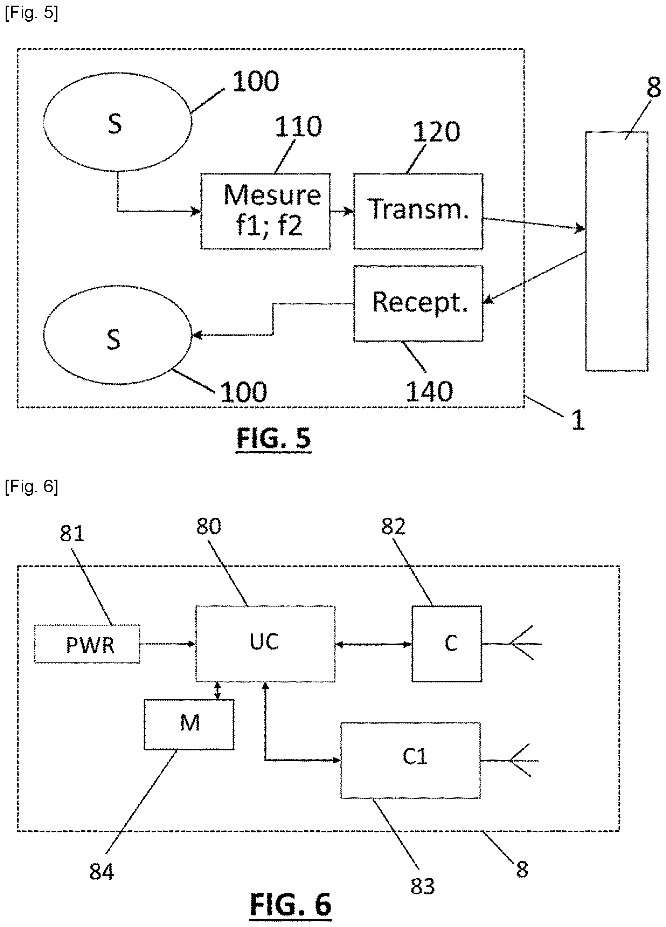

Le fonctionnement du boîtier est schématisé en figure 5. Le processeur de l'électronique de détection comporte une phase de veille 100 et en sort pour effectuer une mesure 110 des fréquences f1 et f2 au niveau des oscillateurs. Les mesures effectuées, le boîtier transmet ces mesures au concentrateur 8 à l'étape 120 puis reçoit un accusé de réception et un ordre de remise en veille 140. Le boîtier retourne en veille pour une durée prédéterminée au niveau du processeur du boîtier.

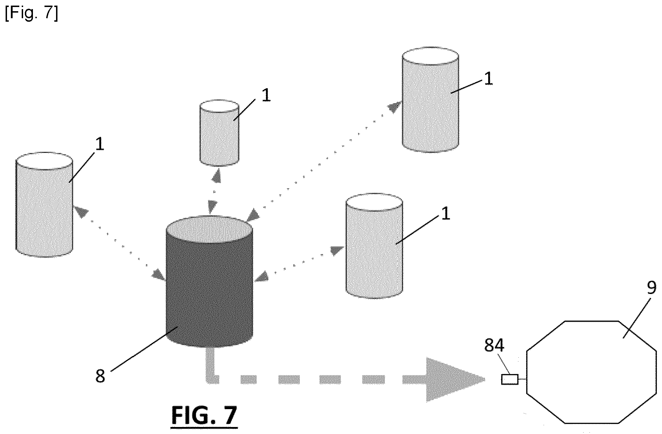

Le concentrateur 8 est schématisé en figure 6 et comporte un processeur 80, une alimentation électrique 81, une mémoire 84 comportant une partie de mémoire programmable recevant les logiciels de fonctionnement du concentrateur et une partie de mémoire vive servant notamment à stocker les mesures et les données issues des boîtiers avant de les transmettre au serveur 9 représenté en figure 7. Pour communiquer avec les boîtiers le concentrateur comporte un premier module de communication radio 82, par exemple selon un protocole subGHz de type wifi par exemple et pour communiquer avec le serveur 9, le concentrateur comporte un second module de communication 83 adapté à communiquer avec le serveur pourvu de moyens de communication 84 selon un protocole 2G, LTE-M, NB-IOT, 4G ou 5G par exemple.

La détection de l'activité des insectes est principalement basée sur la consommation de la masse comestible disposée entre les électrodes de détection. Cette détection se fait sur les séries de mesures obtenues par boîtier et notamment par recherche de variations significatives de la fréquence des premiers oscillateurs des boîtiers susceptibles de constituer une image de la diminution de densité des masses comestibles.

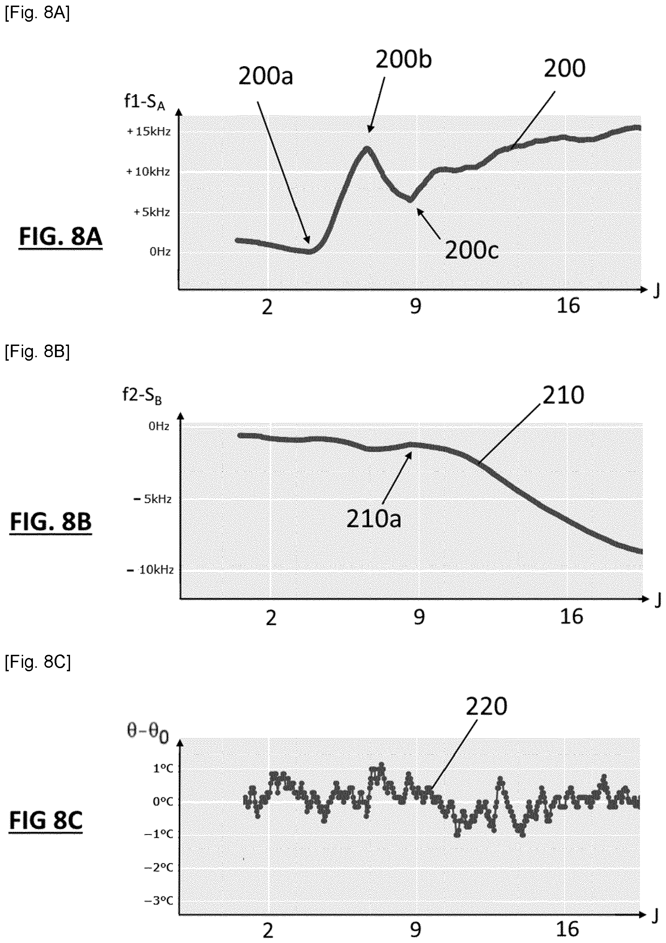

Un exemple de courbes de fréquences en fonction du temps lors d'un essai sur une vingtaine de jours J au niveau d'un élevage de termitière, avec des masses comestibles de type bloc de bois, est donné aux figures 8A à 8C.

En figure 8A est représentée une courbe 200 correspondant à une variation de fréquence f1 - $S_A$ par rapport au temps en jours J et où $S_A$ est la fréquence du premier oscillateur à relaxation à l'état initial et f1 la fréquence du premier oscillateur à un instant donné.

En figure 8B est représentée une courbe 210 correspondant à une variation de fréquence f2 - $S_B$ par rapport au temps en jours J où $S_B$ est la fréquence du second oscillateur à relaxation à l'état initial et f2 la fréquence du second oscillateur à un instant donné.

En figure 8C est représentée une courbe 220 correspondant à une variation de température en °C au niveau de l'électronique de boîtier lors de la mesure.

Dans cet exemple ou l'on voit que sur la courbe 200 de la figure 8A une première inflexion 200a débutant une pente positive d'augmentation de fréquence de l'oscillateur marque le début de consommation de la masse comestible par les insectes, une deuxième inflexion 200b débutant une pente négative correspondant à un apport de terre au niveau de la masse comestible se terminant au niveau d'une troisième inflexion 200c débutant une seconde pente positive correspondant à une consommation continue de la masse comestible par les insectes. Le programme de détection est conçu pour détecter ces variations et en déduire la présence des insectes consommant la masse comestible.

En parallèle sur la figure 8B on constate sur la courbe 210 de variation de fréquence du second oscillateur à relaxation une diminution de la fréquence à partir d'un point d'inflexion 210a, cette diminution de fréquence correspondant à un remplissage de l'espace entre les plaques 31, 32 des électrodes du condensateur du circuit de compensation.

Sur la figure 8C on constate que la température reste stable à plus ou moins 1°C pendant la durée des mesures et n'influe dans ce cas pas sur la détection.

Ainsi les variations éventuellement inverses de l'évolution de la fréquence du second oscillateur dans le temps peut montrer une colonisation du boîtier et un apport de terre par les insectes. Un tel apport de terre peut être une construction ou une agrégation de galeries formées par les insectes, notamment dans le cas de termites.

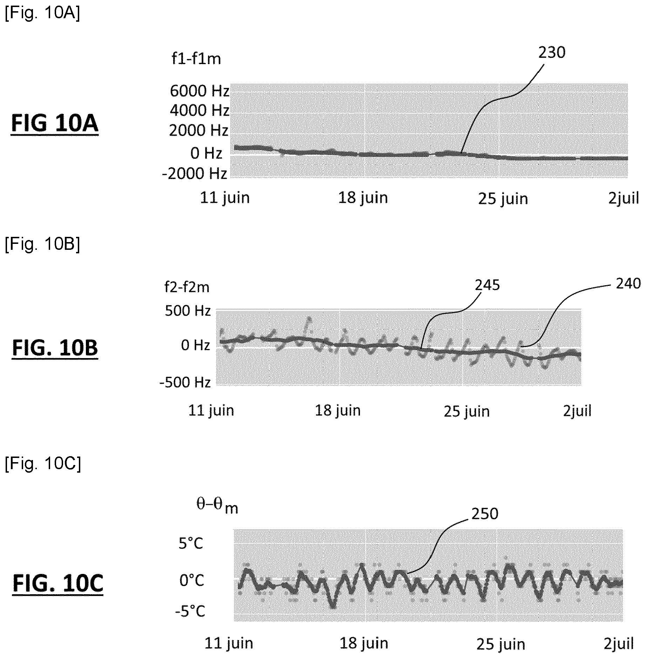

A contrario, les figures 10A, 10C correspondent à des courbes pour un boîtier non infesté, comportant une masse comestible sous la forme d'un bloc de bois au niveau des électrodes du premier oscillateur et dépourvu de masse comestible au niveau des électrodes du deuxième oscillateur. Ce boîtier est disposé dans un terrain dont seule la température varie et on constate que les courbes restent relativement stables tant au niveau du premier oscillateur que du second oscillateur.

La courbe 230 de la figure 10A correspond à la fréquence f1-f1m, fréquence f1 du premier oscillateur dont les plaques de condensateur sont disposées de part et d'autre de la masse comestible moyennée sur une fenêtre de 48 heures, dont est soustraite la valeur médiane f1m et avec compensation en température, la courbe 240 de la figure 10B correspond à la fréquence f2 moyennée sur une fenêtre de 48h dont est soustraite la valeur médiane f2m avant compensation en température, la courbe 245 à la fréquence f2-f2m après compensation en température, la courbe 250 de la figure 10C correspond à la température θ relevée pendant les mesures moyennée sur une période de 6 heures à laquelle est soustraite la température médiane $\theta_m$.

Pour un groupe de boîtiers 1 reliés à un concentrateur 8, à partir de données de fréquence mesurées selon une première périodicité, par exemple plusieurs fois par jour, au niveau du premier oscillateur de chaque boîtier et éventuellement au niveau du second oscillateur il est possible de regrouper ces données au niveau du concentrateur puis de les transmettre selon une deuxième périodicité, par exemple tous les jours vers le serveur distant 9.

Au niveau du serveur distant des calculs sont effectués pour détecter des inflexions et des pentes de variation de fréquence dans les successions de données récoltées au niveau de chaque boîtier.

ce qui correspond par exemple à la courbe 200 pour un boîtier infesté mais aussi des comparaisons de valeurs et de variations dans les données sont effectuées entre les boîtiers en sorte de calculer une probabilité de présence des insectes au niveau de l'un ou plusieurs de ces boîtiers.

En effet, lorsqu'un terrain est équipé, par exemple au moyen d'une dizaine de boîtiers répartis selon un cercle autour d'une construction, en général seuls quelques-uns des boîtiers sont infestés lorsque les insectes à éradiquer sont présents. De ce fait, comme les infestations se produisent dans une direction privilégiée, si des boîtiers entourent un bâtiment à protéger, une comparaison des données entre les boîtiers permet de détecter des variations de fréquence sur certains boîtiers tandis que la majorité des boîtiers présentent des données stables ou variant de manière similaire en fonction des conditions d'humidité et de température dans le sol. Ceci permet de détecter la présence des insectes par exemple en fixant un seuil de variation tel que 20% ou 30% de déviation de fréquence sur un boîtier par rapport à la moyenne des valeurs des autres boîtiers pendant un temps donné, par exemple une journée ou une semaine.

Les calculs de présence d'insectes peuvent prendre en compte d'autres paramètres comme la température et/ou l'humidité au niveau des boîtiers pour éventuellement compenser les variations de fréquence dues à ces paramètres et affiner la détection de présence des insectes.

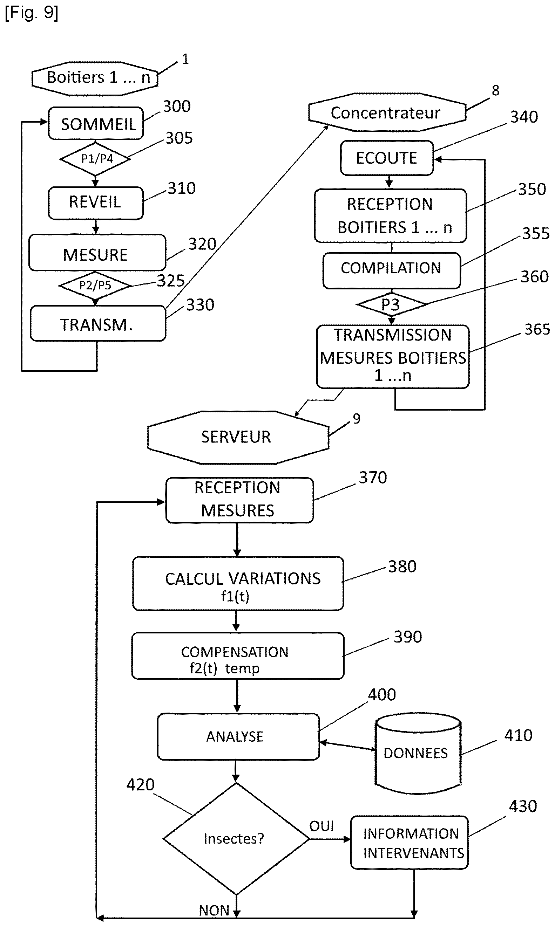

La figure 9 représente un logigramme simplifié du fonctionnement d'un système réalisé selon le présent procédé.

Les boîtiers 1 présentent des cycles de sommeil 300 et de réveil 310 cadencés selon la première périodicité P1 pour les mesures 320 de la fréquence du premier oscillateur 21 ou cadencés selon la quatrième périodicité P4 pour les mesures de la fréquence du deuxième oscillateur 21'. Il est à noter que la première périodicité peut être égale à la quatrième périodicité, les mesures étant réalisées dans une même phase de réveil. Ensuite selon la deuxième périodicité ou la cinquième périodicité 325 les mesures sont transmises 330 au concentrateur 8.

De même la deuxième périodicité et la cinquième périodicité peuvent être identiques et, pour simplifier, une périodicité commune pour les opérations de mesure et de transmission telle que P1=P2=P4=P5 peut être choisie. Les périodicité de mesure et de transmission peuvent être fixes ou variables sur commande du concentrateur selon des instructions du serveur, par exemple pour augmenter la périodicité des mesures lorsqu'une variation de fréquence importante est détectée.

Au niveau du concentrateur 8, ce dernier reçoit à l'étape 350 l'ensemble des données des boîtiers et les stocke pour compiler les données de mesure des boîtiers à l'étape 355 puis, selon une troisième périodicité P3 360 les transmet 365 au serveur 9. La transmission 365 peut être faite dès que l'ensemble des boîtiers du groupe de boîtiers a transmis ses mesures ou après la réception de plusieurs ensembles de mesures compilées, par exemple dans le cas où les boîtiers transmettent des mesures toutes les heures ou plusieurs fois par jour, le concentrateur peut être équipé d'une mémoire de taille suffisante pour transmettre les données mémorisées sur plusieurs jours de mesures en sorte de limiter le nombre de transmissions et donc le coût de transmission dans le cas où celles-ci se font sur un réseau de téléphonie mobile. L'envoi de donnée est ainsi déterminé par une capacité de mémoire et une périodicité.

Au niveau du serveur, après la réception des mesures 370; un programme de calcul 380 procède au calcul des variations de fréquence sur les séries de fréquence mesurées au niveau du premier oscillateur 21, Le programme peut aussi comporter des modules de calcul pour :

selon l'étape 390 :

- calculer des données de compensation issues du deuxième oscillateur,

ou

- calculer de la même façon que pour le premier oscillateur calculer des variations de fréquence du deuxième oscillateur 21' pour effectuer une détection avec cet oscillateur lorsqu'une masse comestible est aussi présente en partie haute ;

ou réaliser une compensation des mesures des oscillateurs selon la température mesurée.

Un programme d'analyses 400, par exemple à partir d'un réseau de neurones entraîné avec des séries de données constituées des mesures de plusieurs sites implantés et rentrées en bases de données 410 peut réaliser la détection 420 de la présence ou non d'insectes. Dans le cas où des insectes sont détectés au niveau d'au moins un boîtier, les intervenants surveillant le système sont informés à l'étape 430 qu'une intervention est à réaliser.

Les intervenants utilisent par exemple pour ce faire une application comportant une génération d'une carte, et/ou ou d'une liste et/ou d'un tableau représentant la répartition des boîtiers reliés à un module concentrateur pour lesquels une présence des insectes a été détectée et un processus service web et/ou application mobile adapté à permettre la consultation par des utilisateurs de ladite carte, de ladite liste ou dudit tableau.

Le système de détection d'insectes nuisibles comporte donc :

a. un groupe de boîtiers appât/piège 1 enterrés de type boîtier tubulaire muni d'un logement tubulaire 11 recevant dans sa partie inférieure au moins une masse comestible 40 de matériau comestible pour lesdits insectes et muni d'un dispositif de détection de consommation de ladite masse comestible par lesdits insectes pourvu d'une électronique de mesure 20 et pourvus:

i. d'un dispositif 21, 22, 23 de mesure d'une première fréquence au niveau d'un premier oscillateur à relaxation 21 comprenant un premier condensateur de mesure réalisé par deux premières plaques 22, 23 situées de part et d'autre de ladite masse comestible qui forme un matériau diélectrique entre lesdites plaques,

ii. d'un processeur 25 configuré pour procéder à des premières mesures 320 de la première fréquence f1 selon une première périodicité P1.

Le groupe de boîtiers est relié à un module concentrateur 8, les boîtiers 1 dudit groupe de boîtiers et ledit module concentrateur comportant chacun des premiers moyens de communication radio C, 82 configurés pour transmettre 330 lesdites premières mesures depuis lesdits boîtiers audit concentrateur selon une deuxième périodicité P2.

Le module concentrateur 8 est relié avec au moins un serveur distant 9, ledit module concentrateur et ledit serveur comportant chacun des seconds moyens de communication 83, 84, par exemple des modules de communication de téléphonie cellulaire de type 4G ou 5G configurés pour transmettre lesdites premières mesures depuis le boîtier concentrateur 8 vers le serveur distant 9 selon une troisième périodicité P3.

Le serveur distant est muni d'un programme de surveillance comportant des moyens de calcul 380, 390 configurés pour mesurer une variation de fréquence caractéristique de la variation de densité de la masse comestible d'au moins un boîtier du groupe de boîtiers au moins à partir d'une pluralité desdites premières mesures.

Le principe de mesure décrit ci-dessus peut permettre dans certaines conditions de détecter directement la présence d'insectes nuisibles mais selon l'exemple représenté, les boîtiers sont munis du deuxième oscillateur à relaxation 21' comprenant un deuxième condensateur de mesure réalisé par des deuxièmes plaques 31, 32.

Selon la figure 2, ladite électronique de mesure 20 et ledit processeur 25 sont alors configurés pour réaliser des deuxièmes mesures de la deuxième fréquence selon une quatrième périodicité P4 et transmettre lesdites deuxièmes mesures audit concentrateur selon une cinquième périodicité P5.

Selon la figure 5 les boîtiers 1 sont chacun pourvu d'un dispositif de gestion de phases de sommeil 100 et de phases de réveil périodiques de leur processeur, ledit processeur est avantageusement configuré pour, lors de ses phases de réveil, réaliser les mesures de fréquence 110, au moyen du dispositif de mesure desdites fréquences et pour gérer l'établissement et la poursuite d'une communication avec le module concentrateur et transmettre 120 lesdites mesures audit module concentrateur 8.

Le module concentrateur est pour sa part être configuré pour communiquer avec lesdits boîtiers pour recevoir périodiquement lesdites premières mesures de chaque boîtier, leur transmettre des données telles que les périodicités P1, P2, P4, P5, des mises à jour programme ou d'autres données mais aussi transmettre lesdites mesures vers ledit serveur distant 9 muni du programme de surveillance.

Les moyens de calcul du serveur sont configurés pour calculer pour chaque boîtier des variations de la fréquence du premier oscillateur en fonction du temps et pour effectuer des comparaisons statistiques sur les données de fréquence collectées en sorte de détecter une diminution de densité d'au moins une desdites masses comestibles à partir desdites variations. Une autre possibilité ou une détection complémentaire peut être de détecter un apport massif de terre éventuellement humide au niveau des électrodes de compensation ce qui peut aussi être une indication d'infestation par les insectes à éradiquer.

Le module concentrateur 8 peut aussi être configuré pour communiquer avec lesdits boîtiers 1 pour recevoir périodiquement lesdites premières mesures de chaque boîtier, compiler lesdites mesures de l'ensemble des boîtiers du groupe de boîtiers et transmettre 365 lesdites mesures compilées vers ledit serveur distant muni dudit programme de surveillance, lesdits moyens de calcul étant configurés pour calculer pour chaque boîtier les variations des données de fréquence en fonction du temps et pour effectuer une comparaison statistique desdites variations en sorte de détecter une diminution de densité d'au moins une desdites masses comestibles à partir desdites variations, une augmentation anormale de densité au niveau des électrodes de compensation si elles sont utilisées ou une combinaison des deux phénomènes.

La présente divulgation propose en outre un procédé de protection d'une surface de terrain, notamment une surface de terrain entourant un ou plusieurs bâtiments, au moyen d'un système de détection selon la présente divulgation pouvant comporter les opérations:

　　　a. installation d'un module concentrateur,

　　　b. implantation d'un groupe de dits boîtiers appâts/-pièges renfermant chacun une masse de matériau comestible dite masse comestible pour lesdits insectes dans ladite surface,

　　　c. appariement desdits un ou plusieurs desdits boîtiers avec ledit concentrateur lors d'une étape d'appariement réalisée pour chacun desdits boîtier,

　　　d. mise du concentrateur en écoute desdits boîtiers configurés pour transmettre de manière périodique après des périodes de sommeil les mesures de fréquences effectuées par le dispositif de mesure audit module concentrateur,

　　　e. transmission selon une deuxième périodicité des mesures de la pluralité de boîtiers vers le concentrateur puis transmission selon une troisième périodicité des mesures depuis ledit concentrateur vers ledit serveur distant,

　　　f. calcul par le serveur distant de variations de fréquences en fonction du temps pour chaque boîtier dudit groupe à partir d'une pluralité de mesures et la réalisation d'une évaluations de la variation de la densité du contenu du piège au niveau d'au moins une desdites masses comestibles à partir desdites variations par détection, à partir des données de fréquence en fonction du temps, de points d'inflexion ou de changements de pente.

L'appariement desdits un ou plusieurs desdits boîtiers avec ledit concentrateur se fait à l'aide d'une application sur un téléphone mobile ou une tablette

Selon un premier mode de réalisation, un programme de détection au niveau du serveur distant est conçu pour surveiller l'évolution de la variation de densité des masses comestibles et un algorithme détermine à partir de cette évolution si lesdits insectes sont présents dans au moins un boîtier pour déclencher une intervention afin de disposer dans ledit au moins un boîtier un boîtier un appât comprenant une composition létale pour lesdits insectes nuisibles ou déterminer à partir de cette évolution le moment à partir duquel une dite intervention est à prévoir.

Le serveur distant peut traiter les données de mesure pour déterminer pour chaque boîtier un taux de consommation des masses comestibles et générer un dit planning d'intervention pour la pluralité de boîtiers.

Les données transmises périodiquement des boîtiers vers le concentrateur, avec les données de mesure peuvent comporter au moins une données parmi:

　　　a. l'identifiant unique du boîtier,
　　　b. la température du boîtier,
　　　c. une mesure de fréquence du premier oscillateur à relaxation,
　　　d. une mesure de fréquence du deuxième oscillateur à relaxation,
　　　e. une datation de la mesure.

Les calculs de présence d'insectes peuvent prendre en compte d'autres paramètres comme la température et/ou l'humidité au niveau des boîtiers.

Si nécessaire, une fréquence différentielle peut être calculée entre la fréquence du premier oscillateur et la fréquence du second oscillateur et les calculs de fréquences différentielles entre le premier et le second oscillateur à relaxation peuvent être du type :

$$F = (F_A - S_A) - [(F_B - S_B) \times k]$$

où :

-　$F$ est la Fréquence différentielle résultante, après compensation,

-　$F_A$, $F_B$ sont les fréquences mesurées sur les condensateurs A de mesure et B du circuit de compensation,

-　$S_A$, $S_B$ sont des offset de compensation des condensateurs A et B,

-　$k$ est une constante de compensation qui dépend de la construction du piège, du choix des matériaux, ainsi que de la taille des plaques des condensateurs,

Ce calcul peut être notamment effectué pour une série de mesures successives réalisées par chaque boîtier dans le cas où le deuxième oscillateur sert à faire des mesures de compensation lorsqu'aucune masse comestible est disposée entre les électrodes du deuxième oscillateur.

Les offsets peuvent correspondent à une capacité à vide des deux condensateurs A et B et sont mesurés lors d'une étape d'initialisation du dispositif lors de l'installation d'un piège en l'absence de masse comestible de sorte que $FA0=S_A$ et de même $FB0 = S_B$.

Le serveur distant peut être configuré pour enregistrer les mesures en provenance des boîtiers et constituer à partir de ces données une base de données de mesure formant une base de données d'apprentissage profond pour un réseau de neurones.

Le serveur distant peut être configuré pour détecter ou même estimer la consommation des masses comestibles à l'aide d'un algorithme d'intelligence artificielle basé sur ledit réseau de neurones entraîné préalablement avec ladite base de données d'apprentissage profond pour les mesures de fréquence.

Pour gérer le fonctionnement du système, les trames de données peuvent comporter en outre au moins l'une des données parmi :

a. un niveau de réception en dBm du concentrateur,

b. une version du logiciel du module concentrateur,

c. une version du logiciel de communication du module concentrateur vers le serveur distant,

d. une indication que le module concentrateur est en procédure d'appairage,

e. un tableau comportant pour chaque boîtier :

f. un identifiant unique du boîtier,

g. un niveau de réception en dBm du boîtier,

h. un niveau de pile du boîtier restant en %,

i. une version du logiciel du boîtier,

j. une donnée indiquant si le boîtier est en mode appairage.

A partir de ces données, le serveur distant s'il est configuré de la sorte, peut notamment effectuer un diagnostic du fonctionnement des moyens de communication du module concentrateur, un diagnostic de la pile du boîtier et du dispositif de communication du boîtier et un diagnostic général du système.

Un processus de traitement comportant une génération d'une carte du terrain recevant les boîtiers ou d'un tableau représentant l'état de consommation des masses comestibles dans les boîtiers reliés à un module concentrateur peut être implémenté pour déterminer si certains des boîtiers sont plus infestés que d'autres. Le procédé peut aussi comporter un processus service web adapté à permettre la consultation par des utilisateurs de ladite carte ou dudit tableau.

Le serveur comportant une base de données d'interventions représentative des implantations de boîtiers et de modules concentrateurs sur un territoire, le procédé peut comporter une mise en oeuvre d'un processus d'organisation d'un planning d'intervention sur lesdits boîtiers sur ledit territoire par des techniciens surveillant lesdits boîtiers et modules concentrateurs en fonction de l'avancée de la consommation des masses comestibles dans les boîtiers. Une fois les interventions effectuées, les opérateurs peuvent mettre à jour la base de données d'interventions pour réaliser le suivi des terrains où des groupes de boîtiers sont installés.

Au plan de l'utilisation du dispositif plusieurs modes de réalisation sont possibles.

Dans un mode de réalisation comprenant une configuration où le second générateur est utilisé en sorte de compenser les mesures issues du premier générateur de fréquence, on dispose une masse comestible en partie basse du panier et la partie supérieure du panier reste dépourvue de bloc ou de masse comestible. Dans ce cas, le deuxième oscillateur peut être utilisé pour générer une seconde fréquence d'oscillation f2 dépendante des variations de taux d'humidité dans le boîtier ou permettre de détecter un apport de terre par les insectes dans le boîtier.

Dans un autre mode de réalisation, par exemple utile lorsque peu de variations de température et d'humidité sont à prévoir au niveau du terrain équipé des dispositifs, une seconde masse comestible est disposée en partie haute du logement afin par exemple d'accroître la capacité de détection du dispositif. Les deux générateurs participent alors à la détection d'une diminution de densité des masses comestibles permettant de détecter la présence des insectes. Cette configuration accroît le volume de matériau comestible disponible et la hauteur de détection possible.

Dans un mode de réalisation particulier, l'utilisateur la possibilité de mettre des matrices comestibles létales ou des capsules comestibles létales en haut et en bas du boîtier dès l'implantation des dispositifs. Les deux paires d'électrodes vont alors mesurer ce qui se passe en partie haute et en partie basse du boîtier. Dans cette configuration, l'empoisonnement de la colonie commence dès que les insectes infestent le ou les boîtiers. La détection se faisant en partie haute et en partie basse des boîtiers et, lorsque les insectes sont détectés, les opérateurs savent quel boîtier, ou quels boîtiers, d'une installation sont infestés et peuvent ainsi déterminer lorsqu'ils doivent intervenir pour remplacer les matrices ou capsules consommées.

Ainsi le boîtier et le système de détection associé sont d'utilisation souple et adaptable au contexte, que ce soit des conditions de température ou d'humidité ou une plus ou moins grande activité des colonies d'insectes à éradiquer.

En résumé, au plan mécanique et électronique, le dispositif de détection d'insectes nuisibles comporte un boîtier tubulaire 1 ajouré implantable dans le sol, pourvu d'un axe longitudinal A et pourvu d'une électronique 20 de détection d'activité desdits insectes.

L'électronique comporte ici :

a. au moins deux premières électrodes capacitives 22, 23 de détection disposées de part et d'autre d'une partie inférieure d'un logement tubulaire 11 s'étendant selon l'axe longitudinal A depuis un sommet ouvert jusqu'à un fond du boîtier, ladite partie inférieure recevant au moins une masse comestible ou bloc 41 de matériau comestible par lesdits insectes dans une partie du logement située dans le fond dudit boîtier.

Ce bloc peut être constitué d'un bloc massif éventuellement en deux parties ou de galets contenus dans une capsule.

L'électronique comprend un premier circuit générateur de fréquence à oscillateur à relaxation 21 et comportant lesdites électrodes capacitives 22, 23 de détection en tant qu'élément capacitif, relié à un dispositif de détection de fréquence d'oscillation 25, ledit oscillateur à relaxation 21 étant configuré pour générer une première fréquence d'oscillation f1 au moins en partie dépendante de la densité dudit bloc 41 de sorte que la consommation de ladite masse comestible 40 par lesdits insectes modifie la première fréquence d'oscillation f1 dudit oscillateur.

Le dispositif de détection de fréquences d'oscillation 25 comporte un processeur P, tel qu'un microcontrôleur muni de moyens de conversion analogique-/numérique, configuré et programmé pour réaliser des mesures desdites fréquences au niveau dudit premier générateur de fréquence.

Dans une version particulière, l'électronique de détection comporte un second circuit générateur de fréquence à second oscillateur à relaxation 21' et comportant au moins deux secondes électrodes capacitives de compensation 31, 32 en tant qu'élément capacitif, disposées dans le boîtier de part et d'autre d'une partie supérieure du logement tubulaire, ledit second circuit étant relié audit dispositif de détection de fréquence d'oscillation 25, et configuré pour générer une seconde fréquence d'oscillation f2 dépendante de l'environnement dudit piège et d'un possible apport de terre dans le piège par lesdits insectes ou représentative de la consommation par les insectes d'une seconde masse comestible ou d'une recharge disposée en partie haute du boîtier.

Comme vu précédemment, le dispositif est souple en ce que la détection peut aussi utiliser le second générateur de fréquence comme détecteur en ajoutant en partie haute du logement une masse comestible, bloc ou une capsule pourvue de galets cellulose avec ou sans insecticide selon le cas.

Le circuit électronique peut être construit en deux plaques de circuits imprimés 26, 27, une première des plaques 26 comportant une première 22 desdites premières électrodes capacitives de détection, le ou lesdits circuits générateurs de fréquence 21, 21' et ledit dispositif de détection de fréquence d'oscillation 25 et une seconde des plaques 27 comportant une deuxième 23 desdites premières électrodes capacitives de détection.

La première desdites plaques 26, 27 porte une première 31 desdites secondes électrodes capacitive de compensation et la seconde desdites plaques porte une seconde 32 desdites secondes électrodes capacitives de compensation lorsque ces dernières sont présentes.

Le premier oscillateur à relaxation 21 et le second oscillateur à relaxation 21' sont réalisés à partir d'au moins un amplificateur opérationnel i1, i2.

Ledit processeur P est selon l'exemple un microcontrôleur comprenant lesdits amplificateurs opérationnels i1, i2 et un circuit convertisseur analogique/digital M convertissant les fréquences générés par lesdits premier circuit générateur de fréquence et second circuit générateur de fréquence en données numériques de signaux de fréquence et relié à une unité de calcul configurée pour mesurer lesdites données numériques de signaux de fréquence, ladite électronique comportant un module de communication C intégré ou non audit processeur et pourvu d'un dispositif d'émission/réception radio configuré pour transmettre lesdites données numériques à un système de surveillance distant 8.

Un blindage actif pourvu de deux plaques 30a, 30b portées au potentiel d'une électrode capacitive du premier oscillateur à relaxation 21 est avantageusement intégré au piège.

Le boîtier tubulaire ajouré comporte une enveloppe tubulaire 12 ajourée formant une paroi périphérique dudit logement tubulaire 11, réalisée autour de l'axe longitudinal A dudit boîtier et recevant ledit bloc ou ladite masse comestible, et des doubles parois formant des cavités latérales 13, 14, de réception de ladite électronique 20 de détection d'activité desdits insectes, diamétralement opposées sur ladite enveloppe par rapport audit axe longitudinal A et recouvrant des côtés de ladite enveloppe 12.

L'enveloppe tubulaire 12 a une section hexagonale selon un plan transversal audit axe A et pour lequel lesdites doubles parois sont disposées en vis-à-vis le long de deux faces diamétralement opposées de ladite enveloppe.

Ladite électronique positionnée dans lesdites cavités est préférablement noyée dans un enrobage de protection 28 la protégeant des insectes et de l'humidité.

Le dispositif peut aussi comporter un cadre tiroir 7 destiné à la base à recevoir un bloc 41 en partie basse et une recharge en partie haute dans les cas les plus courants d'utilisation, le cadre tiroir s'insérant de manière amovible dans le logement tubulaire. D'autres configurations de remplissage du cadre tiroir peuvent être envisagées, par exemple l'équipement du cadre tiroir avec deux recharges 42 munies d'une composition insecticide notamment lorsque l'infestation est caractérisée ou l'équipement du cadre tiroir.

Le bloc 41 comestible par lesdits insectes peut comporter un assemblage cylindrique de section hexagonale régulière perpendiculairement à un axe B1 passant par le centre de ladite section, formé de deux parties de bois massives 411 de section en prisme trapézoïdal et comporte des rainures externes 412 parallèle audit axe de révolution.

Le logement tubulaire comporte, au-dessus de la partie de fond du boîtier recevant ledit bloc, une partie de réception d'une recharge 42 comportant un emballage ajouré 43, 44 et des galets 45 consommables par lesdits insectes.

Ledit cadre tiroir 7 peut comporter un logement de réception dudit bloc 41 et un logement de réception de ladite recharge 42 séparés par une traverse 71.

Le boîtier peut comporter à son sommet un couvercle 5 pourvu d'encoches 51 d'encliquetage de pieds 61 d'une poignée amovible 6 pour fermer le logement tubulaire.

La recharge peut comporter un emballage ajouré 43, 44 recevant des galets consommables par lesdits insectes. L'emballage peut comporter deux demi-coquilles ajourées pourvues de moyens d'encliquetage complémentaires 431, 441 ou reliées par une charnière.

Lesdits galets 45 peuvent être des galets cylindriques de matériau comestible empilés dans ledit emballage.

Ledit emballage 43, 44 est selon l'exemple de section hexagonale perpendiculairement à un axe longitudinal central B2 de ladite recharge. Les galets 45 comportent une composition insecticide.

L'invention ne se limite pas aux exemples décrits ci-avant, seulement à titre d'exemple, mais elle englobe toutes les variantes que pourra envisager l'homme de l'art dans le cadre de la protection recherchée. Par exemple, les ouvertures 16 dans les parois simples en vis-à-vis autour du logement du boîtier peuvent être des ouvertures allongées comme représenté mais aussi des trous ronds recouvrant une majeure parties de ces parois et le couvercle peut être un couvercle à visser plutôt qu'un couvercle à fixation quart de tour.

**Revendications**

1. Système de détection d'insectes nuisibles comportant :

a. un groupe de boîtiers appât/piège enterrés de type boîtier tubulaire muni d'un logement (11) pourvu d'une première partie, en partie basse du boîtier, pour au moins une masse comestible (40) comportant un matériau comestible pour lesdits insectes et muni d'un dispositif de détection de consommation de ladite masse comestible par lesdits insectes pourvu d'une électronique de mesure (20) comportant :

i. un dispositif de mesure d'une première fréquence (f1) au niveau d'un premier oscillateur à relaxation (21) comprenant un premier condensateur de mesure réalisé par deux premières plaques (22, 23) situées de part et d'autre de ladite masse comestible (40), ladite masse comestible formant un matériau diélectrique entre lesdites plaques (22, 23),
ii. un processeur (25) configuré pour procéder à des premières mesures de la première fréquence selon une première périodicité ;

b. au moins un module concentrateur, les boîtiers dudit groupe de boîtiers et ledit module concentrateur comportant chacun des premiers moyens de communication radio (C) configurés pour transmettre lesdites premières mesures depuis lesdits boîtiers audit concentrateur selon une deuxième périodicité ;
c. au moins un serveur distant (9), ledit module concentrateur (8) et ledit serveur (9) comportant chacun des seconds moyens de communication (83, 84) configurés pour transmettre lesdites premières mesures depuis le boîtier concentrateur vers le serveur distant selon une troisième périodicité , ledit serveur distant étant muni d'un programme de surveillance comportant des moyens de calcul configurés pour mesurer des variations de fréquence caractéristiques d'une variation de densité de la masse comestible d'au moins un boîtier du groupe de boîtiers au moins à partir d'une pluralité desdites premières mesures, ladite variation de densité permettant de détecter une consommation de la masse comestible par les insectes.

2. Système de détection d'insectes nuisibles selon la revendication 1 pour lequel au moins certains des boîtiers dudit groupe de boîtiers sont munis d'un circuit de compensation comportant au moins un deuxième oscillateur à relaxation (21') comprenant un deuxième condensateur de mesure réalisé par des deuxièmes plaques (31, 32) disposées au-dessus des premières plaques, ladite électronique de mesure et ledit processeur étant configurés pour réaliser des deuxièmes mesures de la deuxième fréquence selon une quatrième périodicité et transmettre lesdites deuxièmes mesures audit concentrateur selon une cinquième périodicité

3. Système de détection d'insectes nuisibles selon la revendication 2 pour lequel ladite quatrième périodicité est égale à la première périodicité et/ou la cinquième périodicité est égale à la deuxième périodicité.

4. Système de détection d'insectes nuisibles selon la revendication 1, 2 ou 3 pour lequel lesdits boîtiers étant chacun pourvu d'un dispositif de gestion de phases de sommeil et de phases de réveil périodiques de leur processeur, ledit processeur est configuré pour, lors de ses phases de réveil, réaliser les mesures de fréquence, au moyen du dispositif de mesure desdites fréquences et pour gérer l'établissement et la poursuite d'une communication avec le module concentrateur et transmettre lesdites mesures audit module concentrateur, ledit module concentrateur étant configuré pour communiquer avec lesdits boîtiers pour recevoir périodiquement lesdites premières mesures de chaque boîtier, compiler lesdites mesures de l'ensemble des boîtiers du groupe de boîtiers et transmettre lesdites mesures compilées vers ledit serveur distant muni dudit programme de surveillance et des moyens de calcul, lesdits moyens de calcul étant configurés pour calculer pour chaque boîtier une ou plusieurs variations de la fréquence du premier oscillateur en fonction du temps en sorte de détecter une variation caractéristique de densité d'au moins une desdites masses comestibles à partir desdites variations.

5. Procédé de protection d'une surface de terrain, notamment une surface de terrain entourant un ou plusieurs bâtiments, au moyen d'un système de détection selon la revendication 1 ou 2 comportant :

   a. une installation d'un module concentrateur (8),
   b. l'implantation d'un groupe de boîtiers (1) appâts/pièges renfermant chacun une masse comestible (40) de matériau comestible pour lesdits insectes dans ladite surface,
   c. un appariement dudit concentrateur (8) au serveur lors d'une étape d'appariement réalisée pour ledit concentrateur
   d. un appariement desdits un ou plusieurs desdits boîtiers (1) avec ledit concentrateur (8) lors d'une étape d'appariement réalisée pour chacun desdits boîtier,
   e. une mise du concentrateur en écoute desdits boîtiers configurés et une transmission de manière périodique après des périodes de sommeil des mesures de fréquences effectuées par les dispositifs de mesure desdits boîtiers (1) audit concentrateur (8),
   f. une transmission selon la troisième périodicité des mesures de la pluralité de boîtiers depuis le concentrateur (8) vers ledit serveur distant (9),
   g. un calcul par le serveur distant (9) des variations sur les séries de données de fréquences en fonction du temps pour chaque boîtier dudit groupe et la réalisation d'une évaluation de la variation de la densité du contenu du piège au niveau d'au moins une desdites masses comestibles à partir desdites variations par détection de points d'inflexion et/ou de changements de pente sur lesdites séries de données.

6. Procédé selon la revendication 5 pour lequel le serveur distant traite les données de mesure pour détecter la présence desdits insectes dans un boitier via la détection d'oscillations de mesure s'apparentant soit à une consommation de la matrice, soit à un apport de terre, soit les deux.

7. Procédé selon la revendication 5, comportant un calcul par le serveur distant de l'évolution de ladite variation de densité et un algorithme de détermination à partir de ladite évolution si lesdits insectes sont présents dans au moins un boîtier pour déclencher une intervention afin de disposer, dans ledit au moins un boîtier, un appât comprenant une composition létale pour lesdits insectes nuisibles ou déterminer à partir de ladite variation de densité le moment à partir duquel une dite intervention est à prévoir.

8. Procédé selon la revendication 5, 6 ou 7 pour lequel ledit serveur distant traite les données de mesure pour déterminer pour chaque boîtier un taux de consommation des masses comestibles et générer un dit planning d'intervention pour la pluralité de boîtiers.

9. Procédé de protection selon l'une quelconque des revendications 5 à 8 pour lequel les boîtiers sont configurés pour transmettre périodiquement, outre les données de mesure des boîtiers, des trames de données comportant au moins une donnée parmi:

   i. un identifiant unique du boîtier,
   ii. une température du boîtier,
   iii. une mesure de fréquence du premier oscillateur à relaxation,
   iv. une mesure de fréquence du deuxième oscillateur à relaxation,
   v. une datation de la mesure.

10. Procédé selon l'une quelconque des revendications 5 à 9 pour lequel, les boîtiers étant munis de circuits de compensation comportant au moins un deuxième oscillateur à relaxation comprenant un deuxième condensateur de mesure réalisé par des deuxièmes plaques (31, 32) disposées hors de la présence de ladite masse comestible (40), lesdites électroniques de mesure et lesdits processeurs desdits boîtiers étant configurés pour réaliser des deuxièmes mesures de la deuxième fréquence selon une quatrième périodicité et transmettre lesdites deuxièmes mesures audit concentrateur selon ladite quatrième périodicité , le serveur distant est configuré pour effectuer l'évaluation de la consommation des masses comestibles par les insectes à partir de calculs comportant des calculs de fréquences différentielles entre la fréquence du premier oscillateur à relaxation et du second oscillateur à relaxation.

11. Procédé selon la revendication 10 pour lequel les calculs de fréquences différentielles entre le premier et le second oscillateur à relaxation sont du type :

$$F = (F_A - S_A) - [(F_B - S_B) \times k]$$

où :

- $F$ est la Fréquence différentielle résultante, après compensation,
- $F_A$, $F_B$ sont les fréquences mesurées sur les condensateurs A de mesure et B du circuit de compensation,
- $S_A$, $S_B$ sont des offset de compensation des condensateurs A et B,
- $k$ est une constante de compensation qui dépend de la construction du piège, du choix des matériaux, ainsi que de la taille des plaques des condensateurs,
ce calcul étant effectué pour une série de mesures successives réalisées par chaque boîtier.

12. Procédé selon la revendication 11 pour lequel les offsets correspondent à une capacité à vide des deux condensateurs A et B et sont mesurés lors d'une étape d'initialisation du dispositif lors de l'installation d'un piège en l'absence de masse comestible de sorte que $FA0 = SA$ et de même $FB0 = SB$ .

13. Procédé selon l'une quelconque des revendications 5 à 12 pour lequel le serveur distant est configuré pour enregistrer les mesures en provenance des boîtiers et constituer une base de données de mesure formant une base de données d'apprentissage profond pour un réseau de neurones.

14. Procédé selon la revendication 13 pour lequel le serveur distant est configuré pour estimer la consommation des masses comestibles à l'aide d'un algorithme d'intelligence artificielle basé sur ledit réseau de neurones entraîné préalablement avec ladite base de données d'apprentissage profond pour les mesures de fréquence.

15. Procédé de protection selon la revendication 9 pour lequel le concentrateur transmet au serveur outre les données de mesure, des trames de données comportant au moins l'une des données parmi :

    a. un niveau de réception en dBm du concentrateur,
    b. une version du logiciel du module concentrateur,
    c. une version du logiciel de communication du module concentrateur vers le serveur distant,
    d. une indication que le module concentrateur est en procédure d'appairage,
    e. un tableau comportant pour chaque boîtier au moins l'un des :

        i. identifiant unique du boîtier,
        ii. niveau de réception du signal radio entre boîtier et concentrateur,
        iii. niveau de pile du boîtier restant en %,
        iv. version du logiciel du boîtier,
        v. une ou plusieurs données indiquant si le boîtier est en mode appairage,

et pour lequel le serveur distant est configuré pour effectuer à partir des données reçues un diagnostic du fonctionnement des moyens de communication du module concentrateur, un diagnostic de la pile du boîtier et du dispositif de communication du boîtier.

16. Procédé selon l'une quelconque des revendications 5 à 14 pour lequel le serveur comportant un dispositif collecteur configuré pour collecter les messages issus des boîtiers tels que transmis par les modules concentrateurs, le procédé comporte une mise en oeuvre d'un processus de traitement comportant une génération d'une carte, et/ou d'une liste et/ou d'un tableau représentant la répartition des boîtiers reliés à un module concentrateur pour lesquels une présence des insectes a été détectée et un processus service web et/ou application mobile adapté à permettre la consultation par des utilisateurs de ladite carte, de ladite liste ou dudit tableau.

17. Procédé selon l'une quelconque des revendications 5 à 15 pour lequel le serveur comportant une base de données d'interventions représentative des implantations de boîtiers et de modules concentrateurs sur un territoire, le procédé comporte une mise en oeuvre d'un processus d'organisation d'un planning d'intervention sur lesdits boîtiers sur ledit territoire par des techniciens surveillant lesdits boîtiers et modules concentrateurs en fonction de l'avancée de la consommation desdites masses comestibles.

18. Procédé selon la revendication 16 pour lequel le procédé comporte une mise à jour de la base de données d'interventions par des techniciens avec les interventions effectuées.

[FIG. 1]

FIG. 1

[FIG. 2]

**FIG. 2**

[FIG. 3]

**FIG. 3**

[Fig. 4]

**FIG. 4**

[Fig. 5]

**FIG. 5**

[Fig. 6]

**FIG. 6**

[Fig. 7]

**FIG. 7**

[Fig. 8A]

FIG. 8A

[Fig. 8B]

FIG. 8B

[Fig. 8C]

FIG 8C

[Fig. 9]

Boitiers 1 ... n —— 1

SOMMEIL —— 300

P1/P4 —— 305

REVEIL —— 310

MESURE —— 320

P2/P5 —— 325

TRANSM. —— 330

Concentrateur —— 8

ECOUTE —— 340

RECEPTION BOITIERS 1 ... n —— 350

COMPILATION —— 355

P3 —— 360

TRANSMISSION MESURES BOITIERS 1 ...n —— 365

SERVEUR —— 9

RECEPTION MESURES —— 370

CALCUL VARIATIONS f1(t) —— 380

COMPENSATION f2(t) temp —— 390

ANALYSE —— 400

DONNEES —— 410

Insectes? —— 420

OUI

INFORMATION INTERVENANTS —— 430

NON

[Fig. 10A]

**FIG 10A**

f1-f1m

230

6000 Hz
4000 Hz
2000 Hz
0 Hz
-2000 Hz

11 juin    18 juin    25 juin    2juil

[Fig. 10B]

**FIG. 10B**

f2-f2m

245    240

500 Hz
0 Hz
-500 Hz

11 juin    18 juin    25 juin    2juil

[Fig. 10C]

**FIG. 10C**

θ-θm

250

5°C
0°C
-5°C

11 juin    18 juin    25 juin    2juil

Europäisches
Patentamt

European
Patent Office

Office européen
des brevets

**RAPPORT DE RECHERCHE EUROPEENNE**

Numéro de la demande

**EP 23 18 9063**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 2007/120690 A1 (BARBER DANIEL T [US] ET AL) 31 mai 2007 (2007-05-31) <br> * figures 1, 3-7, 17-20 * <br> * alinéas [0050], [0109] – [0116], [0123] – [0126] * <br> ----- | 1-18 | INV. <br> A01M1/02 <br> A01M1/24 <br> G06Q50/02 |
| A | WO 2019/010365 A1 (BASF CORP [US]) 10 janvier 2019 (2019-01-10) <br> * figures 1, 2a, 2b * <br> * alinéas [0041] – [0046] * <br> ----- | 1-18 | |
| A | WO 2017/011574 A1 (BASF CORP [US]) 19 janvier 2017 (2017-01-19) <br> * figure 1 * <br> * page 9, ligne 18 – page 12, ligne 20 * <br> ----- | 1-18 | |
| A | US 2003/160699 A1 (TROMPEN MICK A [US]) 28 août 2003 (2003-08-28) <br> * figures 1, 2 * <br> ----- | 1-18 | |
| A | US 2010/083556 A1 (WRIGHT PAUL [GB] ET AL) 8 avril 2010 (2010-04-08) <br> * figure 1 * <br> ----- | 1-18 | **DOMAINES TECHNIQUES RECHERCHES (IPC)** <br><br> A01M <br> G06Q |

Le présent rapport a été établi pour toutes les revendications

| Lieu de la recherche | Date d'achèvement de la recherche | Examinateur |
|---|---|---|
| Munich | 15 janvier 2024 | Ketelheun, Anja |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 18 9063

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-2024

| Document brevet cité au rapport de recherche | Date de publication | Membre(s) de la famille de brevet(s) | Date de publication |
|---|---|---|---|
| US 2007120690 A1 | 31-05-2007 | AT    E354952 T1 | 15-03-2006 |
|  |  | BR    0211812 A | 09-01-2007 |
|  |  | CN    1564657 A | 12-01-2005 |
|  |  | EP    1424888 A1 | 09-06-2004 |
|  |  | EP    1772054 A2 | 11-04-2007 |
|  |  | ES    2282507 T3 | 16-10-2007 |
|  |  | HK    1074349 A1 | 11-11-2005 |
|  |  | JP    4064920 B2 | 19-03-2008 |
|  |  | JP    2005527182 A | 15-09-2005 |
|  |  | JP    2006296432 A | 02-11-2006 |
|  |  | KR    20040036904 A | 03-05-2004 |
|  |  | TW    568748 B | 01-01-2004 |
|  |  | US    2002101352 A1 | 01-08-2002 |
|  |  | US    2007120690 A1 | 31-05-2007 |
|  |  | WO    03013237 A2 | 20-02-2003 |
| WO 2019010365 A1 | 10-01-2019 | AU    2018297307 A1 | 23-01-2020 |
|  |  | BR    112020000157 A2 | 01-09-2020 |
|  |  | CN    111093368 A | 01-05-2020 |
|  |  | CN    115568450 A | 06-01-2023 |
|  |  | EP    3648594 A1 | 13-05-2020 |
|  |  | JP    7341977 B2 | 11-09-2023 |
|  |  | JP    2020526199 A | 31-08-2020 |
|  |  | JP    2023134471 A | 27-09-2023 |
|  |  | US    2019008131 A1 | 10-01-2019 |
|  |  | US    2020107532 A1 | 09-04-2020 |
|  |  | US    2023148583 A1 | 18-05-2023 |
|  |  | WO    2019010365 A1 | 10-01-2019 |
| WO 2017011574 A1 | 19-01-2017 | AU    2016294434 A1 | 08-02-2018 |
|  |  | BR    112018000802 A2 | 04-09-2018 |
|  |  | CN    108024524 A | 11-05-2018 |
|  |  | EP    3322287 A1 | 23-05-2018 |
|  |  | JP    6826099 B2 | 03-02-2021 |
|  |  | JP    2018519840 A | 26-07-2018 |
|  |  | US    2018132468 A1 | 17-05-2018 |
|  |  | US    2019000060 A1 | 03-01-2019 |
|  |  | US    2019239499 A1 | 08-08-2019 |
|  |  | WO    2017011574 A1 | 19-01-2017 |
| US 2003160699 A1 | 28-08-2003 | AUCUN |  |
| US 2010083556 A1 | 08-04-2010 | US    2010083556 A1 | 08-04-2010 |
|  |  | WO    2008063939 A2 | 29-05-2008 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2015159 A1
- EP 3648594 A1
- US 2010043276 A1
- US 2007120690 A1